Europäisches Patentamt

(19) **European Patent Office**

**Office européen des brevets**

(11) Veröffentlichungsnummer: **0 050 182**
**B1**

(12) **EUROPÄISCHE PATENTSCHRIFT**

(45) Veröffentlichungstag der Patentschrift:
**18.12.85**

(51) Int. Cl.⁴: **G 01 D 15/06, B 41 J 3/20**

(21) Anmeldenummer: **81103245.7**

(22) Anmeldetag: **30.04.81**

(54) **Verfahren zum Herstellen einer elektrischen Aufzeichnungsvorrichtung.**

(30) Priorität: **16.10.80 DE 3039058**

(43) Veröffentlichungstag der Anmeldung:
**28.04.82 Patentblatt 82/17**

(45) Bekanntmachung des Hinweises auf die Patenterteilung:
**18.12.85 Patentblatt 85/51**

(84) Benannte Vertragsstaaten:
**AT DE FR GB NL**

(56) Entgegenhaltungen:
**DE - A - 2 150 343**
**DE - A - 2 348 556**
**US - A - 3 751 801**
**US - A - 3 965 479**
**US - A - 3 978 494**

(73) Patentinhaber: **ROBERT BOSCH GMBH, Postfach 50,**
**D-7000 Stuttgart 1 (DE)**

(72) Erfinder: **Hanke, Dieter-Georg, Ing.-Grad., Londoner**
**Strasse 52, D-1000 Berlin 65 (DE)**

(74) Vertreter: **Schmidt, Hans-Ekhardt, Robert Bosch GmbH**
**Geschäftsbereich Elektronik Patent- und**
**Lizenzabteilung Forckenbeckstrasse 9-13,**
**D-1000 Berlin 33 (DE)**

ACTORUM AG

## Beschreibung

### Stand der Technik

Die Erfindung geht aus von einem Verfahren nach der Gattung des unabhängigen Anspruchs. Ein solches Verfahren ist aus dem Dokument DE-A-2 348 556 bekannt.

Es. ist schon ein Druckverfahren bekannt (BOSCH-Druckschrift «RMP, das Registrier-Metall-Papier», WEB 14, IA-KO-DRM 1/80), bei dem eine starre Kammelektrode mit in einer Reihe angeordneten Aufzeichnungselektroden zum Beschriften eines Registrier-Metall-Papiers dient. Die einzelnen Aufzeichnungselektroden stehen beispielsweise über einen Steckverbinder mit einem Flachbandkabel in Verbindung, das je Aufzeichnungselektrode eine Ader hat. Infolge der Miniaturisierung der Aufzeichnungsvorrichtungen sind die Elektroden in einem sehr kleinen Raster angeordnet, so dass das Anbringen eines Steckverbinders oder eines Flachbandkabels, dessen Anschlüsse ein grösseres Rastermass haben, nicht mehr möglich ist. Abhilfe schafft hier eine bekannte Aufzeichnungsvorrichtung (DE-A1-2 348 556), bei der die anschlussseitigen Enden der Kammelektroden in zwei übereinanderliegende Reihen aufgeteilt sind. Die erste Reihe umfasst dabei die anschlussseitigen Enden der ersten, dritten, fünften usw. und die zweite Reihe die anschlussseitigen Enden der zweiten, vierten, sechsten usw. Kammelektrode. Die beiden Reihen von Kammelektroden werden aus zwei gleichartigen Blechteilen hergestellt, die derart übereinander und voneinander isoliert angeordnet und justiert werden müssen, dass die Kammelektroden genau «auf Lücke» stehen. In der DE-A-2 348 556 wird auf die Möglichkeit hingewiesen, alle Kammelektroden eines Elektroden-Druckkopfes aus einem einzigen Blechteil durch Ätzen oder Stanzen herzustellen. Von der Möglichkeit wird jedoch ausdrücklich abgeraten.

### Vorteile der Erfindung

Das erfindungsgemässe Verfahren mit den kennzeichnenden Merkmalen des unabhängigen Anspruchs hat den Vorteil, dass die Herstellung der elektrischen Aufzeichnungsvorrichtung erheblich vereinfacht wird.

Durch die in den Unteransprüchen aufgeführten Massnahmen sind vorteilhafte Weiterbildungen und Verbesserungen des im Hauptanspruch angegebenen Verfahrens möglich. Besonders vorteilhaft ist das Verfahren, wenn ein die erste oder die zweite Reihe von Kammelektroden an dem anschlussseitigen Ende verbindender schmaler Steg des Blechteils nach dem gemeinsamen Abbiegen dieser Reihe von Kammelektroden abgeschnitten wird. Durch das Zusammenhängen der Kammelektroden einer Reihe lässt sich das Herausbiegen der Kammelektroden dieser Reihe aus der Ebene des Bleches besonders einfach bewerkstelligen.

### Zeichnung

Ein Ausführungsbeispiel der Erfindung ist in der Zeichnung an Hand mehrerer Figuren dargestellt und in der nachfolgenden Beschreibung näher erläutert. Die Zeichnung zeigt in

Fig. 1a bis 1h je eine perspektivische Ansicht der erfindungsgemässen Aufzeichnungsvorrichtung in verschiedenen Stadien des Herstellungsverfahrens und

Fig. 2 eine Seitenansicht der kompletten Aufzeichnungsvorrichtung mit Anschlussmitteln.

### Beschreibung der Erfindung

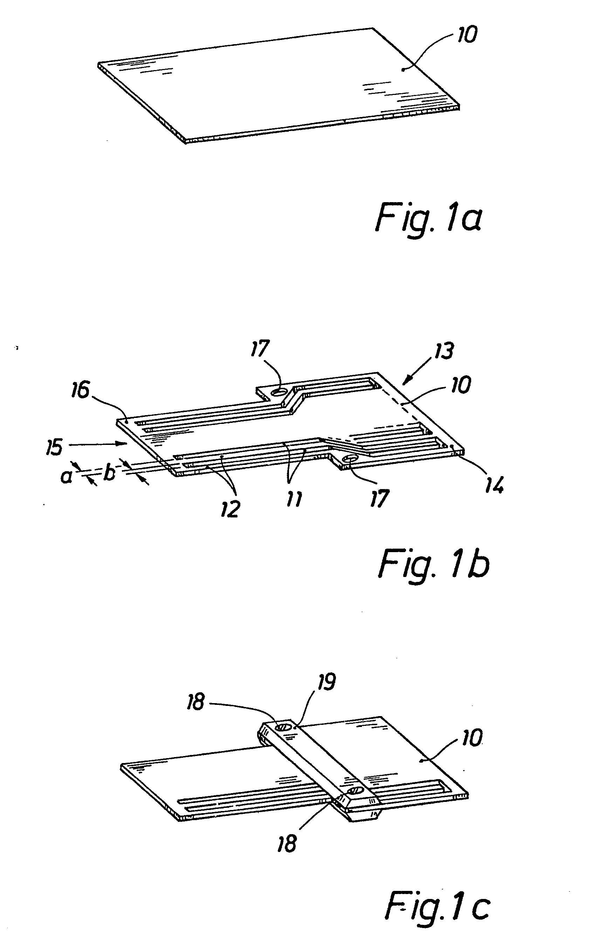

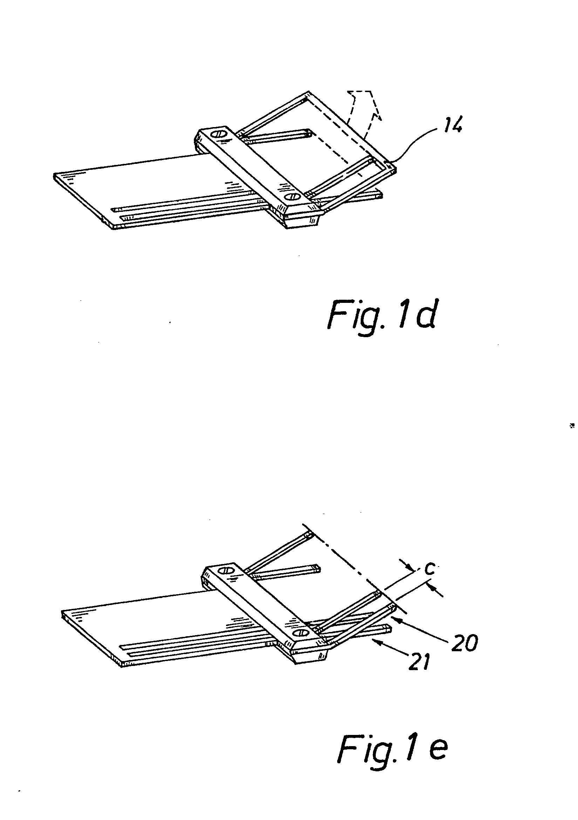

Die Herstellung einer erfindungsgemässen elektrischen Aufzeichnungsvorrichtung geht von einem rechteckigen, ebenen Blechteil 10 aus (Fig. 1a). Das Blechteil wird, zum Beispiel durch Ätzen, derart bearbeitet, dass es die in Fig. 1b gezeigte Form annimmt. Durch das Herausätzen von Schlitzen 11 entstehen kammförmige Aufzeichnungselektroden, die im folgenden als Kammelektroden 12 bezeichnet werden. Die Schlitze 11 sind an dem anschlussseitigen Ende 13 des Blechteils 10 paarweise miteinander verbunden, so dass die erste, dritte, fünfte ... Kammelektrode über einen schmalen Steg 14 miteinander verbunden sind, während die zweite, vierte, sechste ... Kammelektrode freistehen. An dem aufzeichnungsseitigen Ende 15 sind alle Kammelektroden über einen schmalen Steg 16 miteinander verbunden. Die Schlitze 11 sind, bezogen auf die Längsachse des Blechteils zu dem anschlussseitigen Ende 13 hin derart geformt, dass das Rastermass der Kammelektroden am anschlussseitigen Ende grösser ist als am aufzeichnungsseitigen Ende. Die Kammelektroden haben eine Breite a von beispielsweise 0,3 mm und die Schlitze eine Breite b von zum Beispiel 0,2 mm. Die Blechdicke beträgt beispielsweise 0,2 mm. Das Blechteil selbst hat eine Breite von zum Beispiel 27 mm und eine Länge von zum Beispiel 34 mm. Das Blechteil besteht vorzugsweise aus einem verschleissfesten Werkstoff, wenn die Aufzeichnungsvorrichtung in einem Drucker für Registrier-Metall-Papier Verwendung findet.

Nach Fig. 1c wird das Blechteil oben und unten von einem stabförmigen Halter 19 umschlossen, der vorzugsweise durch Umspritzen der Kammelektroden mittels eines isolierenden Kunststoffs hergestellt wird. Beim Umspritzen fliesst der Kunststoff auch durch zu beiden Seiten des Blechteils angeordnete Öffnungen 17. Der Halter kann auch aus zwei länglichen Teilen bestehen, die durch Schrauben 18 miteinander verbunden sind und die Öffnungen 17 durchsetzen. Der Halter sorgt dafür, dass die Kammelektroden bei der anschliessenden Bearbeitung ihren gegenseitigen Abstand beibehalten.

Nach Fig. 1d werden durch Anheben des Steges 14 in Pfeilrichtung alle mit diesem Steg verbundenen Kammelektroden, das sind die erste, dritte, fünfte ... Kammelektrode, gemeinsam aus der Ebene des Blechteils 10 herausgebogen, während die nicht durch den Steg 14 miteinander verbundenen Kammelektroden, das sind die zweite, vierte, sechste ... Kammelektrode, ihre Lage beibehalten. Durch anschliessendes Abtrennen des schmalen Steges 14 (vgl. Fig. 1e) werden die vorher durch den Steg miteinander verbundenen Kammelektroden freigelegt. Es sind somit zwei räumlich voneinander getrennte Reihen 20, 21 von Kammelektroden vorhanden, deren Kammelektroden im Vergleich zu dem aufzeichnungsseitigen Ende 15 der Elektroden (vgl. Fig. 1b) einen erheblich grösseren Rasterabstand c aufweisen.

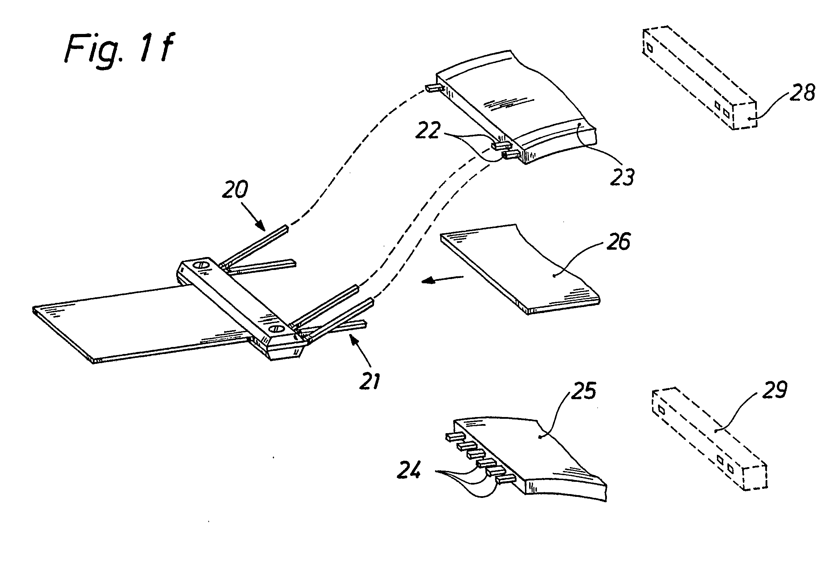

Nach Fig. 1f werden die Kammelektroden der oberen Reihe 20 mit den Adern 22 eines ersten Flachbandkabels 23 und die Kammelektroden der unteren Reihe 21 mit den Adern 24 eines zweiten Flachbandkabels 25 leitend verbunden. Um die Kammelektroden der ersten Reihe 20 von den Kammelektroden der zweiten Reihe 21 elektrisch zu trennen, ist eine Isolierstoffolie 26 vorgesehen, die zwischen die beiden Flachbandkabel 24, 25 bzw. die beiden Reihen 20, 21 von Kammelektroden eingeschoben wird.

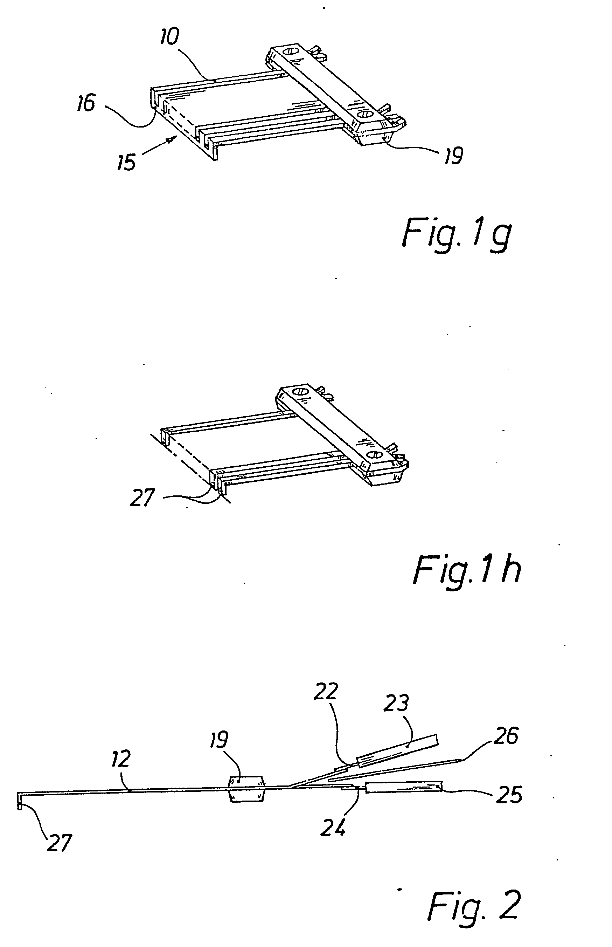

Anschliessend wird das aufzeichnungsseitige Ende 15 des Blechteils 10 rechtwinklig zur Ebene des Blechteils nach unten abgebogen (vgl. Fig. 1g). Dann wird der Steg 16 abgetrennt (vgl. strichpunktierte Linie in Fig. 1h), so dass die Kammelektroden Elektrodenspitzen 27 bilden.

Die nach dem Verfahren gemäss den Fig. 1a bis 1h hergestellte elektrische Aufzeichnungsvorrichtung ist im Fertigzustand in Fig. 2 gezeigt.

Anstelle der unmittelbaren Verbindung zwischen den Anschlüssen der Kammelektroden 12 und den Adern 22, 24 der Flachbandkabel 23 und 25 können auch zwei Steckverbinder 28, 29 vorgesehen sein, deren Anschlüsse das Rastermass der anschlussseitigen Enden der Kammelektroden aufweisen (vgl. Fig. 1f).

## Patentansprüche

1. Verfahren zum Herstellen einer elektrischen Aufzeichnungsvorrichtung mit einer Vielzahl von in einer Ebene nebeneinanderliegenden Kammelektroden, die zusammen mit einem die anschlussseitigen Enden (13) dieser Elektroden verbindenden Steg (14) durch Stanzen oder Ätzen aus Blech erzeugt werden, die durch einen quer zur Längsausdehnung der Kammelektroden (12) ausgerichteten Halter (19) aus Isolierstoff fest verbunden werden, die an ihren aufzeichnungsseitigen Enden (15) einen kleineren gegenseitigen Rasterabstand als an den anschlussseitigen Enden (13) aufweisen und an ihren anschlussseitigen Enden (13) in zwei übereinanderliegende, durch eine Zwischenlage getrennte Reihen (20, 21) aufgeteilt werden, wobei die erste Reihe (20) durch die anschlussseitigen Enden (13) der ersten, dritten, fünften usw. und die zweite Reihe (21) durch die anschlussseitigen Enden (13) der zweiten, vierten, sechsten usw. Kammelektrode (12) gebildet wird, dadurch gekennzeichnet, dass die Kammelektroden (12) aus einem einzigen Blechteil (10) erzeugt werden, dass die anschlussseitigen Enden (13) der ersten Reihe (20) aus der Ebene des Blechteils (10) herausgebogen werden und dass danach der die anschlussseitigen Enden (13) der ersten Reihe (20) verbindende Steg (14) abgeschnitten wird.

2. Verfahren nach Anspruch 1, dadurch gekennzeichnet, dass ein alle Kammelektroden (12) am aufzeichnungsseitigen Ende (15) verbindender schmaler Steg (16) des Blechteils (10) nach einer etwa rechtwinklig zur Ebene des Blechteils erfolgten Biegung abgeschnitten wird.

3. Verfahren nach Anspruch 1, dadurch gekennzeichnet, dass der Halter (19) durch Umspritzen der Kammelektroden (12) mit einem Kunststoff hergestellt wird.

4. Verfahren nach Anspruch 1 oder einem der folgenden, dadurch gekennzeichnet, dass die Kammelektroden (12) am anschlussseitigen Ende (13) mit je einem Steckverbinder (28, 29) pro Reihe (20, 21) der Kammelektroden verbunden werden.

## Claims

1. A method of manufacturing an electrical recording device, having a plurality of comb-like electrodes which are located adjacent to one another in one plane and which, together with a bridge portion (14) interconnecting the connection ends (13) of the said electrodes, are produced from sheet metal by stamping or etching and are rigidly connected together by a holder (19) of insulating material which extends transversely of the longitudinal direction of the comb-like electrodes (12), the recording ends (15) of which electrodes are spaced at a smaller raster distance apart than the connection ends (13), and their connection ends (13) are split up into two rows (20, 21) which are located one above the other and separated by an intermediate layer, the first row (20) being formed by the connection ends (13) of the first, third, fifth etc. comb-like electrodes (12), and the second row (21) being formed by the connection ends (13) of the second, fourth, sixth etc. comb-like electrodes (12), characterised in that the comb-like electrodes (12) are produced from a single sheet metal part (10), that the connection ends (13) of the first row (20) are bent out of the plane of the sheet metal part (10), and that the bridge portion (14) interconnecting the connection ends (13) of the first row (20) is then cut off.

2. A method as claimed in claim 1, characterised in that a narrow bridge portion (16) of the sheet metal part (10) interconnecting all the comb electrodes (12) at the recording end (15) is cut off after bending it approximately at right angles to the plane of the sheet metal part.

3. A method as claimed in claim 1, characterised in that the holder (19) is produced by extrusion-coating the comb-like electrodes (12) with a plastics material.

4. A method as claimed in claim 1 or in one of the claims following claim 1, characterised in that the connection end (13) of each comb-like electrode (12) is connected to a plug connector (28, 29) per row (20, 21) of the comb-like electrodes.

**Revendications**

1. Procédé pour fabriquer un dispositif d'enregistrement électrique, comportant un certain nombre d'électrodes en forme de peignes situées les unes à côté des autres dans un plan, qui sont obtenues à partir de tôle, par découpage ou décapage, conjointement avec une traverse (14) reliant les extrémités (13) de ces électrodes situées du côté de leurs raccordements, qui sont assemblées solidement par un élément de maintien (19) en matière isolante orienté transversalement par rapport à l'extension longitudinale de ces électrodes (12) en forme de peignes, qui présentent à leurs extrémités (13) situées du côté de l'enregistrement un plus petit espacement de grille mutuel qu'aux extrémités (13) situées du côté des raccordements, et qui sont réparties à leurs extrémités (13) situées côté raccordement en deux rangées (20, 21) situées l'une au-dessus de l'autre et séparées par une couche intermédiaire, la première rangée (20) étant formée par les extrémités (13) côté raccordement des première, troisième, cinquième etc... électrodes (12) en forme de peignes, et la seconde rangée (21) étant formée par les extrémités (13) côté raccordement des deuxième, quatrième, sixième, etc... électrodes (12) en forme de peignes, dispositif d'enregistrement caractérisé en ce que les électrodes (12) en forme de peignes sont constituées à partir d'un élément de tôle (10) unique, en ce que les extrémités (13) côté raccordement de la première rangée (20) sont coudées hors du plan de l'élément de tôle (10) et en ce qu'ensuite la traverse (14) reliant les extrémités (13) côté raccordement de la première rangée (20) est coupée.

2. Procédé selon la revendication 1, caractérisé en ce qu'une étroite traverse (16) de l'élément de tôle (10) reliant toutes les électrodes (12) en forme de peignes à l'extrémité (15) côté enregistrement est coupée après un recourbement effectué à peu près à angle droit par rapport au plan de l'élément de tôle.

3. Procédé selon la revendication 1, caractérisé en ce que l'élément de maintien (19) est réalisé par encastrement par extrusion des électrodes (12) en forme de peignes avec une matière synthétique.

4. Procédé selon la revendication 1, ou l'une des suivantes, caractérisé en ce que les électrodes (12) en forme de peignes sont reliées, à l'extrémité (13) côté raccordement, à un connecteur à fiches (28, 29) pour chaque rangée (20, 21) des électrodes en forme de peignes.

Fig. 1a

Fig. 1b

Fig. 1c

*Fig. 1d*

*Fig. 1 e*

Fig. 1 f

20

21

22

23

24

25

26

28

29

0 050 182

Fig. 1 g

Fig. 1 h

Fig. 2